# EUROPEAN PATENT APPLICATION

(11) **EP 1 603 075 A1**
(43) Date of publication of application: **07.12.2005**
(21) Application number: 03715365.7
(22) Date of filing: 07.03.2003
(51) Int. Cl.: G06K 19/00, G06F 17/60

(54) **CAPACITIVE DATA STORING METHOD, VARIOUS SYSTEMS USING THE METHOD, AND VARIOUS GOODS**

(71) Applicant: Secure Card International, Inc., Evanston, IL 60201 (US)
(72) Inventor: Awano, Koichi c/o Secure Card International, Inc., Evanston, IL 60201 (US)
(74) Representative: Pratt, David Martin
(86) International application number: PCT/JP2003/002717
(87) International publication number: WO 2004/079641

(57) **Abstract**

A capacitive data storing method is disclosed. A fuse circuit section is provided in advance by a printing technique. Fixed information including a card number and printed on the fuse circuit section different with each of goods such as a card, and consequently identification of goods is reliable. Further security is high since counterfeit and alteration of the fixed information is substantially impossible. By linking the fixed information printed on the fuse circuit section to the information stored in a magnetic storage section and an IC storage section or stored as a bar code, the security performance of various goods especially requiring counterfeit preventing means is improved. The various good include a banking card, a credit card, a pre-paid card, a telephone card, a game card, a gift card, a CD, a DVD, an authentication card for an on-line banking system, an identification card such as a license card, a key card, and a gift coupon usable off-line, or a book coupon card. Such a capacitive data storing method, various systems using the method and various goods are provided.

## Description

### BACKGROUND OF THE INVENTION

### FIELD OF THE INVENTION

This invention relates to a capacitive data storing method and various systems and goods thereof. The capacitive data storing method houses a fuse circuit in a product such as a CD, a DVD and a card, recording and storing a used money amount or the card ID according to a card formation type. The various systems and goods with method thereof comprise a banking system, an authentication card for an on-line banking system, a game card, a CD, a DVD, an identification card such as a license card, a key card, a gift coupon usable off-line and a book coupon.

### DESCRIPTION OF THE PRIOR ART

A capacitive data card constituting a portion of a circuit having a capacitor has been known as a data card of low price and low energy. As such capacitive card system, card systems are, for example, disclosed in the description of US Patent No. 4280119 and WO 95/14285. These card systems house a fuse in the circuit of the capacitive card. If the fuse is intact, an electric current can be flown, and if the fuse blows out, a resistance substantially increases. Therefore, a system is constituted so as to show data bits in accordance with a resistance state of the fuse.

This capacitive card can form a circuit having a capacitor only after a card portion is integrated with a sensor portion formed on a reader side. This is not illustrated particularly.

The card portion comprises a resistance portion and an electrode portion forming a part of capacitor which is wire-connected to each of terminals of the resistance portion. A sensor portion has an electrode portion which forms a part of capacitor to be wire-connected to each of terminals of a power source. When the card portion is placed on the sensor portion, a circuit is formed, the circuit having an air capacitor with air kept between each of electrodes.

In the circuit of such formation, if the fuse is burnt out by flowing an electric current to the resistance portion at a high voltage, the fuse is used up, and a non-burn-out state becomes an unused bit. In this manner, a bit signal is given to a single closed circuit. Accordingly, a formation of a plurality of closed circuits constitutes a data card which enables to store a signal having necessary digit number.

However, in the case of such conventional capacitive card, since a plurality of closed circuits should be formed by irradiating laser beam in each case, a production of a data card becomes very cumbersome and requires a complicated process for treatment. Furthermore, in order to improve a security of the data card, the closed circuit of each of data cards should be different. Accordingly, since the production of the data card, in other words, an irradiation and control of laser beam is a killer, and the production process is not adequate for a mass production, it is a problem to be solved that the card has not general versatility for various products.

The present invention is made in accordance with the present set of circumstances and purposes for producing products such as a data card at a low price in a very simple manner without irradiating laser beam, providing a highly-versatile, difficult-to-counterfeit-or-alter capacitive data storing method and various goods using method thereof.

### DISCLOSURE OF THE INVENTION

The present invention solves the above-mentioned problems with the following means.

A first aspect of the present invention provides a capacitive data storing method, wherein an optional number of a closed circuit and an open circuit made of conductive material are formed in a thin film condition on a substrate made of non-conductive material by using various technologies for making a conductive metal circuit film, and wherein the closed circuit and the open circuit differ on a substrate to substrate basis so as to store an ID or a pin number of each of substrates or various information.

In the present invention, the substrate includes a bank card or a credit card made of plastic, a thin plate card such as a prepaid card and a telephone card, a paper card such as a gift coupon, a gift card and a book coupon, and a disk-shaped CD or DVD.

A second aspect of the present invention provides various technologies forming a conductive metal circuit film which include, for example, a screen printing method, a hot stamping, an etching, a thermal transfer, a laser marking and so forth.

To the screen printing method, conventional known printing integrated circuit forming technologies, a MS sputtering technology or a silk screen printing technology may be applied.

To the hot stamping or the etching, conventional known technologies may be applied.

To the thermal transfer, known thermal transfer, for example, a nanoinprinting technology, a MLC and a technique using a conductive sheet technology may be applied.

Further, in the laser marking, since a different circuit is required to be formed per substrate as the present invention does, a scan laser marking which a computer automatically controls is preferred. Especially, this technology is a printing technology which enables to engrave in the product itself and is preferred for an application requiring a high abrasion property. Moreover, when a mass productivity is required, it is desirable to use a mask laser marking technology.

A third aspect of the present invention provides a closed circuit and an open circuit formed on the substrate, wherein the closed circuit and the open circuit formed on the substrate are overcoated with a non-conductive electronic material such as a polyethylene film and constituted so as not to be viewed from the outside. In this case, since a thickness of the circuit and a thickness of the overcoated layer can be adjusted to a few *µ*m, there is no drag even if a reader reads circuit information.

A fourth aspect of the present invention provides a substrate which enables to further improve versatility by parallelly placing a magnetic memory portion so as to update, for example, points, various information or money amount information in real time.

A capacitive data storing method according to the aspects first to fourth may be applied to specific products, for example, a bank card, a credit card, a prepaid card, a telephone card, a gift coupon and a book coupon, and as an anti-counterfeit means for a CD and a DVD.

The present invention is to provide a technology which prevents counterfeit and alteration and is of low price suitable for a mass production. In the case of conventional magnetic cards or IC cards, it is easy to copy magnetic data and magnetic IC data onto a faked card without data. But in a card of the present invention, since each of cards has a so-called different fuse, the card cannot be copied onto a card without data.

Further, as an anti-counterfeit measure for conventional magnetic cards there is no way except for verifying a file on line. It is possible to make a copy by skimming. In the case of the IC card, a measure of inputting a four-digit pin number on line is adopted as a countermeasure, but it is also easy to copy by skimming. In the case of a product according to the present invention, it is impossible to make a copy even on line and does not require to block by inputting a four-digit pin number.

Furthermore, when setting a settlement allowance for a magnetic card such as a conventional credit card, an arrangement is performed in a centre file, and in the case of the IC card, the arrangement can be performed in an IC chip. Therefore, it is possible to make a copy, but the present invention provides a constitution where verification between the magnetic memory portion and the fuse code is performed. Accordingly, it is possible to use the present invention on line and off line and neither counterfeit nor alteration at all can be concerned.

Further, since the present invention provides a system in which a fuse circuit is produced by a printing technology, it is possible to produce a product of the present invention at a same price as that of conventional magnetic card, and a cost can be reduced to about half an IC card with IC chips implant.

Besides, conventional magnetic card can be used only by a card owner himself/herself due to a very high possibility of counterfeit and alteration. In the case of the IC card, since it requires an input of a pin number, it can be used by the owner himself/herself. But in the case of the present invention, since there is neither anxiety of counterfeit and alteration nor requirement to input the pin number, a third person can use the gift card of the present invention.

Conventional magnetic cards require countermeasures such as a parallel use of a holograph technology for preventing counterfeit. In the product of the present invention, it is not necessary to use the holograph technology as in the case of the IC card and a lower price than the magnetic card with the holograph technology can be provided. On the total cost, the product of the present invention may be provided at a lowest price to improve versatility.

In this manner, the method of the present invention is an only technology for assuredly preventing cards or CDs from unauthorsed use without requiring a great amount of investment and drastically reduces an insurance premium for counterfeit and alteration.

### BRIEF DESCRIPTION OF THE DRAWINGS

Fig. 1 is a surface diagram showing a capacitive card of the embodiment of the present invention.
Fig. 2 is a backside diagram showing the capacitive card.
Fig. 3 is a block diagram showing a circuitry of a fuse circuit area of the capacitive card.
Fig.4 is an illustration showing a relationship between the capacitive card and a card reader.
Fig. 5 is an illustration showing an example of bit alignment in the fuse card circuit area of the present embodiment.
Fig. 6 is an illustration of an application example of the present invention.
Fig. 7 is a card constitution according to a supplied type of the present invention: Fig. 7A shows an example of a card constitution which is used for, e.g. a prepaid card. Fig. 7B shows an example of a stripe card constitution which is used for, e.g. a bank card, a credit card or a gift card. Fig. 7C shows an example of a card constitution which is used for a rewritable prepaid card.

Fig. 8 shows an example of a gift card which employs a fuse circuit of other example of the present invention in combination with a bar code. Fig. 8A shows a reading state at the time of sale. Fig. 8B shows an illustration showing a reading state at the time of use.

Fig. 9 is an illustration showing an example of the present invention which is applied to a bank card.

### DETAILED DESCRIPTION OF THE PREFERRED EMBODIMENT

Now, an embodiment of the present invention will be described by referring to the accompanying drawings.

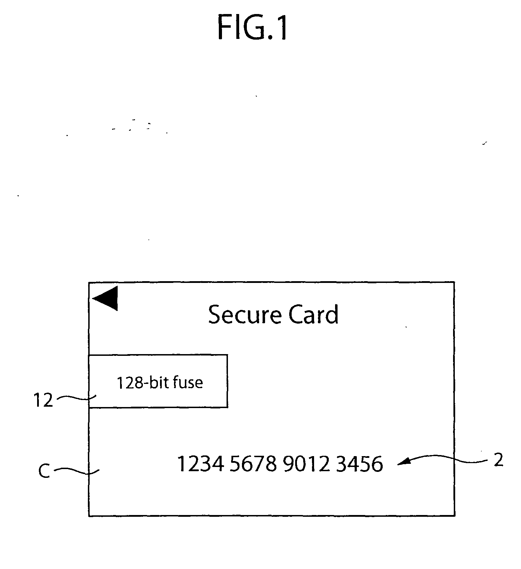

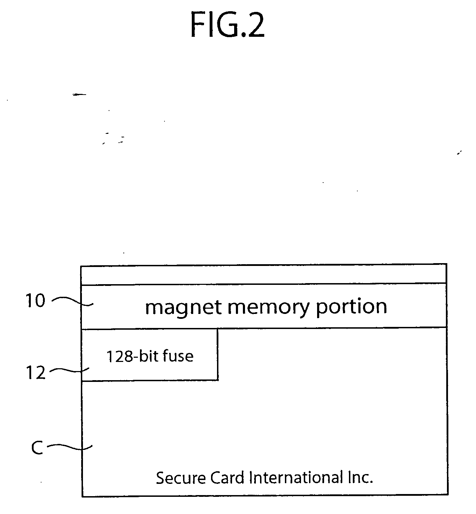

Fig. 1 shows a surface of a capacitive card C of the embodiment of the present invention. Fig. 2 shows a backside of the card C.

The card C of the present embodiment is formed on a rectangle-shaped substrate made of synthetic resin as non-conductive material. On the card C are printed a 128-bit fuse circuit portion 12 and a magnetic memory portion 10.

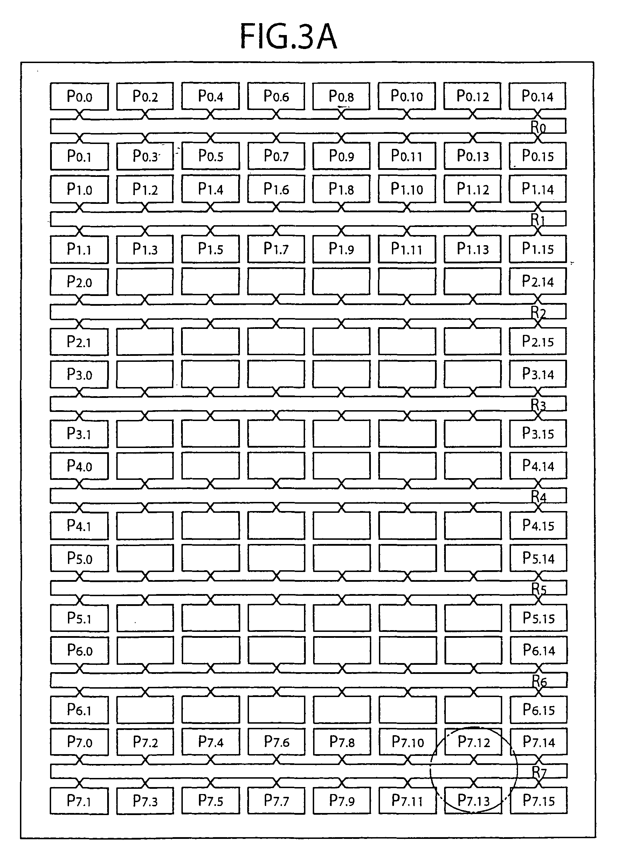

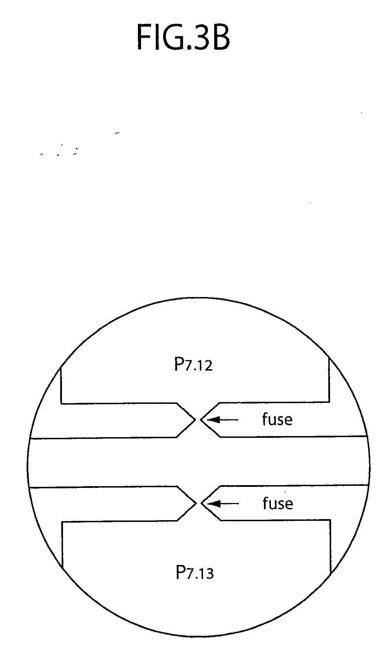

The fuse circuit portion (we also call it a capacitive storing portion) 12 of each of cards C comprises a plurality of a first electrode 31 and a second electrode 32 as shown in Fig. 3. The first electrode 31 is arranged in a row on a surface so as to conform to an arrangement of electrode of an input output portion 6 to be described later. The second electrode 32 is arranged in parallel to the row of the first electrode 31 and formed in an elongated shape. The both electrodes are printed on the surface.

Each first electrode 31 is printed in a condition that the electrode 31 is connected to the second electrode 32 via a fuse 33. On the portion where the fuse 33 is connected, an electric current freely flows between the first electrode 31 and the second electrode 32 and a resistance is very small. At the portion where the fuse 33 is cut, an increase of resistance enough for decreasing the flow of the electric current is produced.

In the fuse circuit portion 12 of such constitution, for example, an identification number of the card can be arranged on a rough estimate balance memory portion showing a rough estimate of production amount of storing consideration.

Card information which is usually stored in a "prepaid card" comprises fixed information which is not rewritten and variable information which is rewritten when the card is used.

The fixed information includes a "card issuer code", a "card issue date", a "card face amount," a "card validity", a "card number" and so forth. In the present embodiment, the fixed information is stored in the fuse circuit portion 12. A part of the fixed information is also stored in the magnetic memory portion 10. Thus, the card is constituted so as to verify a consistency. That is, for example, it is constituted so that: the "card number" of the fixed information is recorded as a capacitive data; the same number as a card number is recorded in the magnetic memory portion 10; and further the same card number 2 is engraved on the card surface for verification.

On the other hand, variable information to be stored in the magnetic portion 10 includes besides the "card number" a "previous balance of card (balance before clearance)", a "new balance of card (balance after clearance)", a "number of a used device (device number used for clearance)" and a "used shop (shop code where a clearance is made)". The balance of card is shown either in amount or in degree for telephone card according to an application purpose of the card.

The magnetic memory portion 10 has a magnetic truck in a R/W direction of the card C. The number of trucks is according to the amount of memory according to an application purpose of the card C.

Storing memory in the truck is performed in order of information character. Valid data to be stored is coded with a cyclic redundancy checksum code (CRC code) for a read inspection. Magnetic characteristics and information storing manner of the magnetic memory portion 10 may be based on, for example, the Japanese Industrial Standard (JIS).

Further, the magnetic memory portion 10 can store information including, for example, a riding section of transport facility and a usage section of highway road according to the usage purpose in addition to the fixed information and the variable information.

In the present embodiment, the fuse circuit portion 12 of such arrangement is formed by using a scan laser marking printing method. The scan laser marking printing method can easily produce the product of the present invention requiring a different fuse circuit per card C by a computer's automatic control. In the case of a mass production, a complicated fuse circuit of a few *µ*m can be produced by a mask-type laser masking, a known screen printing method, a hot stamping, an etching and a thermal transfer.

In present embodiment, a magnetic storing portion 10 is formed along with the fuse circuit. The magnet storing portion 10 is also formed by a known screen printing method and so forth.

In the present embodiment, the fuse circuit formed on the card substrate is overcoated with non-conductive material such as a polyethylene film to make a protection layer, which is then constituted not to make the fuse circuit visible from the outside, just to be safe.

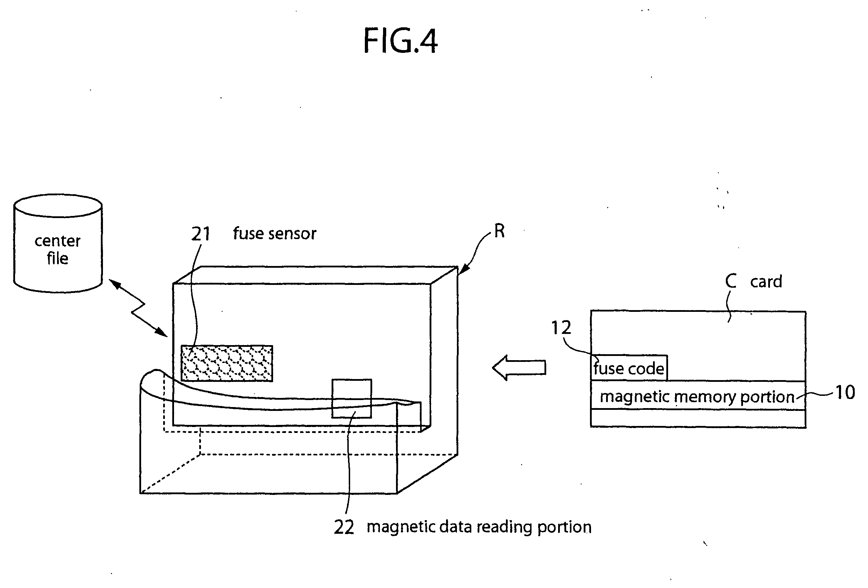

The following is a brief explanation of a reader R for the card C. An input and output portion of the reader R of the card C comprises a capacitive data reading portion 21 and a magnetic data reading portion 22 as shown in Fig. 4. The capacitive data reading portion 21 reads out information of the fuse circuit portion 12 of the card C. The magnetic data reading portion 22 reads out information of the magnetic memory area 10. Another separate constitution comprising a specialsed capacitive data reading device and a specialsed magnetic data reading device may be possible as a reading device. One of the two reading devices reads out data and then other of the two devices reads out data, so as to verify. Since constitution of the data reading portion has been known, the detailed explanation is omitted here.

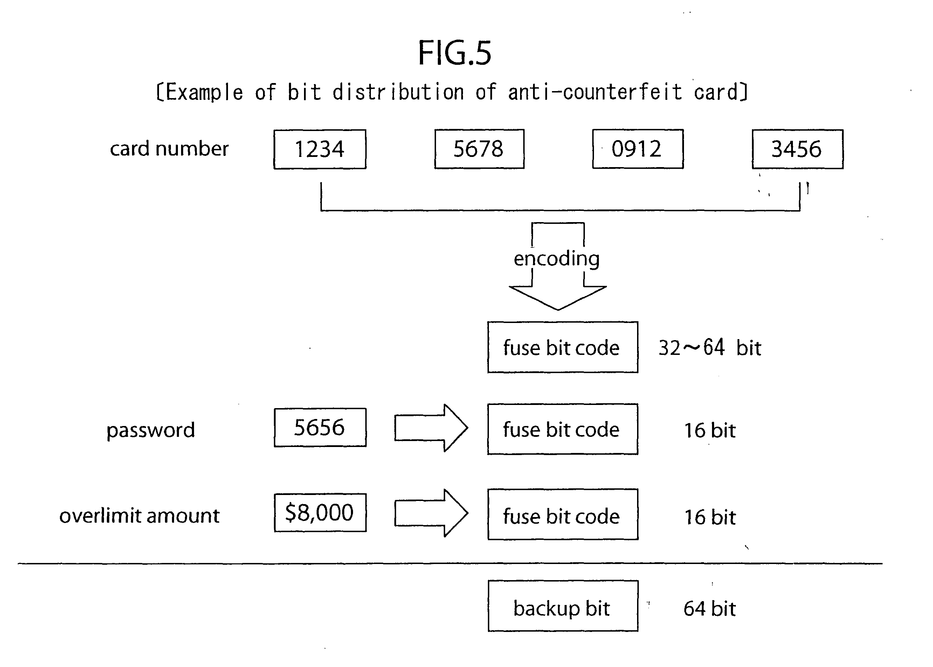

Fig. 5 shows an example of allocation of bit information of the fuse circuit portion 12 (in the present embodiment 128 bits are used). 32 to 64 bits are allocated to the 16 digits of the card number "1234 5678 0912 3456." 16 bits are allocated to the 4 digits of the pin number "5656." 16 bits are allocated to the overlimit information "$8000." Furthermore, 64 bits are allocated to backup bits for preventing counterfeit.

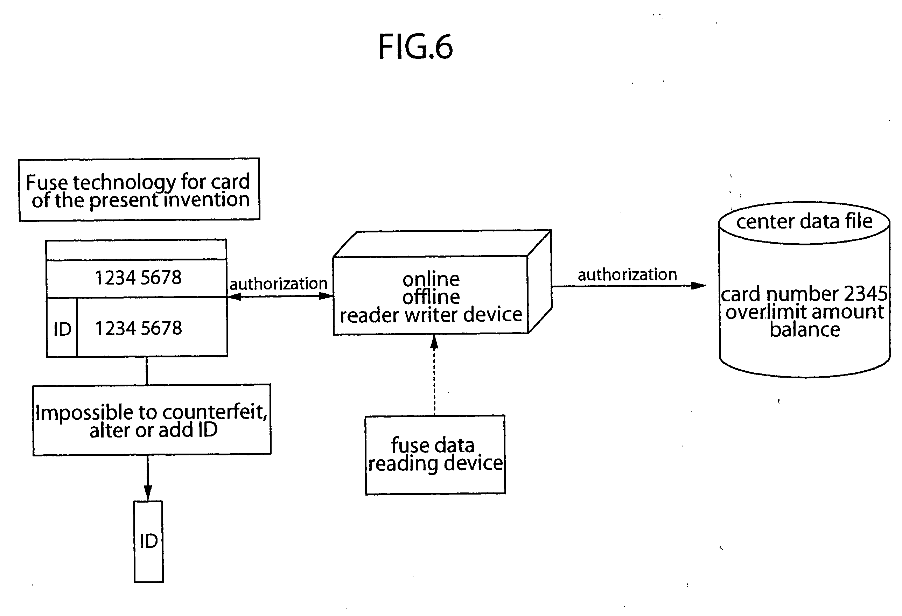

Fig. 6 shows a flow chart in case where the card C of such constitution is used on line or off line. Since the card C in the present embodiment does not require an input of a pin number and so forth, either use may be possible.

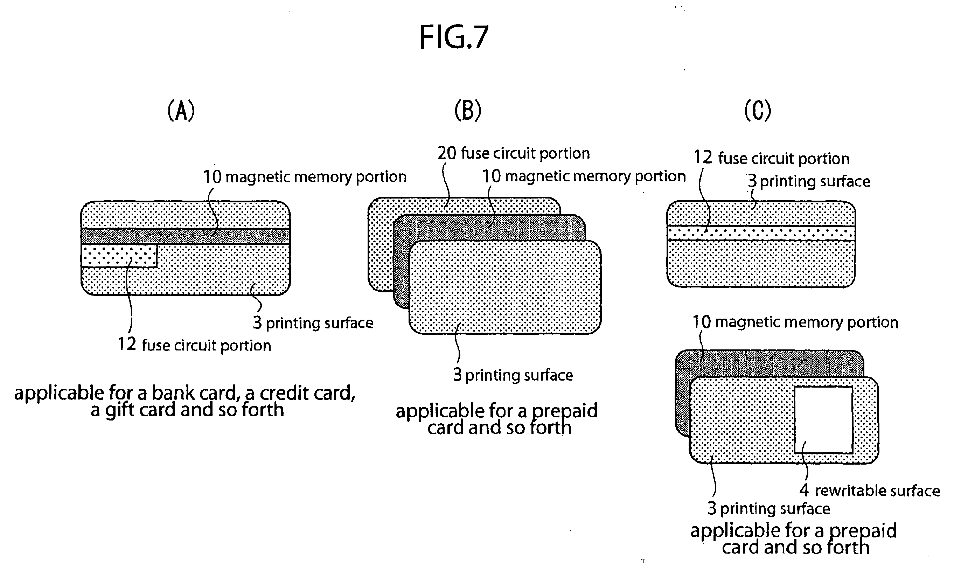

Fig. 7 shows an example of a card constitution according to the card of the present invention. Fig. 7A shows a card constitution which is applied to, for example, a prepaid card. On the backside of the substrate (not shown) a fuse circuit portion (capacitive area) 12, a magnetic memory portion 10 and a printing surface 3 are printed in layers in this order. Fig. 7B shows a stripe card constitution which is applied to, for example, a bank card, a credit card or a gift card. The example shows that a stripe magnetic memory portion 10 and a fuse circuit portion (fuse area) 12 are printed on a printing surface 3 of the substrate (not shown). Fig. 7C shows, for example, a card constitution which is applied to, for example, a rewritable prepaid card. The example shows that a stripe fuse circuit portion (fuse area) 10 is printed on one of printing surfaces 3, a rewritable surface 4 is formed on other of printing surfaces 3 and a magnetic memory portion 10 is formed on the back side of the other of printing surfaces 3.

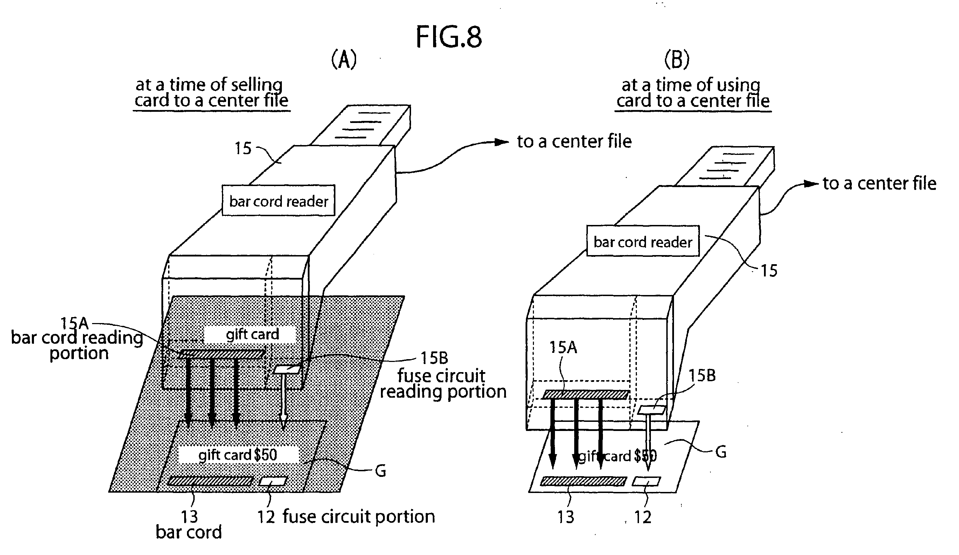

Fig. 8 shows an example where instead of the magnetic memory area 10 a fuse circuit 12 is used in parallel with a bar code 13 that is printed on the gift card G and shows product information such as a card number of the gift card G. In this example, when a card is sold (refer to Fig. 8A), information of bar code 13A printed on the gift card G is read out with the bar code reading portion 15A of the bar code reader 15. Besides, information of the fuse circuit portion 12 is read out by the fuse circuit information reading portion 15B which is parallelly placed together with the bar code reading portion 15A. Each of information read out by these portions is transferred to the centre file. When the gift card G is used, the bar code reading potion 15A of the bar code reader 15 installed at an available shop reads out information of the printed bar code 13A printed on the gift card C and information of the fuse circuit 12 is read out with the fuse circuit information reading portion 15B. Each of information read out by these portions is transferred to the centre file for judging true or false.

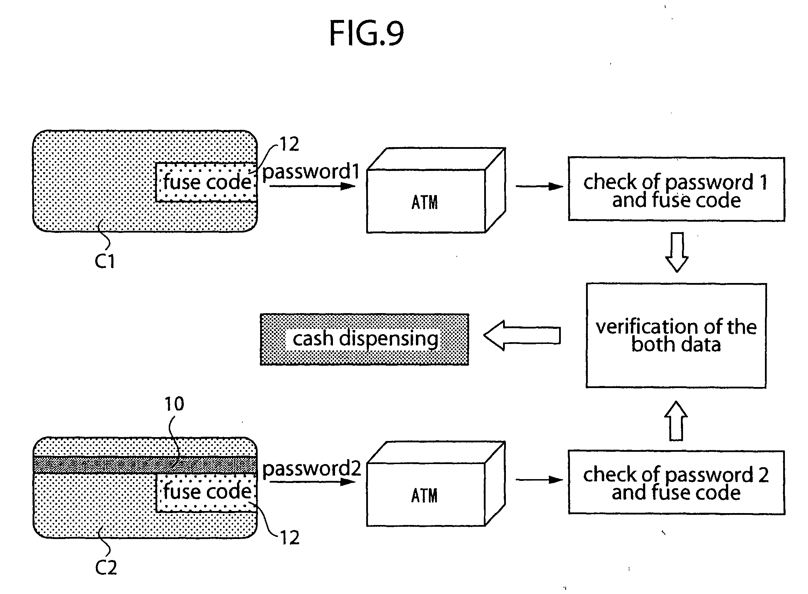

Fig. 9 shows an example which the present invention is applied to a bank card. In the example, two cards C1 and C2 are provided to an account. The card C1 is provided with only a function as a key card for cashing from the account, that is, only with this card C1 a cashing is not allowed. The card C2 is provided with a function for cashing (which is a same function as that for a currently used bank cash card) and is constituted so as not to perform a cashing only by itself. When the owner of the card C1 inserts the card into an ATM machine and then inputs a first pin number previously set, a usable condition is provided for the card C2. After the first pin number is authenticated right, the owner inserts the card C2 and then inputs a second pin number previously set. After the second pin number is also authenticated right, if the owner inputs an amount to draw, he/she can receive a cashing or other services.

The double block can solve a problem such that, when a bank card and a pin number (a second pin number in the present embodiment) are stolen, cash is easily drawn from the account in a traditional way. The double block further effectively prevents counterfeit of a bank card.

As explained above, the present embodiment shows that since the magnetic memory area 10 and/or the bar code portion 13 are added to the area of the fuse circuit 12 of the card, the magnetic memory 10 is free to rewrite necessary data and allows a high potential and if the bar code portion 13 and/or the area of the fuse circuit 12 are set up to store a specified data, a data reproduction cannot be performed easily and then alteration of data is prevented. This boosts up a reliability of the card.

A tangible product of such constitution which enables the card C usable has an absolute condition of preventing counterfeit and alteration. For example, the card may be applicable to a bank card, a credit card, a prepaid card, a telephone card, a gift coupon, a gift card or a book coupon. It can be also applicable as a copy protection means of a CD and a DVD.

Further, if a capacitive data storing method according to the present invention is applied, there are provided effects such as: easy application to an authentication card of internet; and due to strong difficulty security of an electronic settlement and so forth may be protected with very high security.

### INDUSTRIAL APPLICABILITY

As described above, the capacitive data storing method according to the present invention offers the following advantages.

According to the first aspect of the present invention, there is provided a capacitive data storing method where a fuse circuit portion is previously produced with a printing technology and fixed information such as a card number to be printed on the fuse circuit portion is set up to be different per product such as a card. The capacitive data storing method in the manner makes sure to identify the product and provides a high security due to a substantial impossibility of counterfeit and alteration of the fixed information, further increasing the security function by linking the fixed information of the fuse circuit portion with information stored in a magnetic memory portion.

According to the second aspect of the present invention, there is provided a capacitive data storing method using any one of a screen printing method to be used for print and production of LSI circuit, a hot stamping, an etching, a thermal transfer and a laser marking as various technologies for forming a conductive metal circuit film. The capacitive data storing method in the manner allows to easily produce a circuit of required bits at a low price and to drastically improve versatility.

According to the third aspect of the present invention, there is provided a capacitive data storing method where, since a closed circuit and an open circuit formed on the substrate are protected by overcoating with a non-conductive electronic material such as a polyethylene film, a fuse circuit cannot be viewed from the outside and the security is high and since the protecting layer is coated at a thickness of a few *µ*m, a read out of the fuse circuit is not influenced.

According to the fourth aspect of the present invention, there is provided a capacitive data storing method where, since the substrate is parallelly equipped with a magnetic memory portion allowing to rewrite points, various information or money amount information in real time or with an IC card portion formed with an IC card allowing to store a large volume of information, versatility may be further improved and a link of fixed information of the fuse circuit portion with information stored in the magnetic memory portion may further increase the security function.

According to the fifth aspect of the present invention, there is provided a capacitive data storing method where, since with parallel use of the fuse circuit portion various information of an ID or a pin number of each of substrates or overlimit money amount are printed by using bar code, a link of fixed information of the fuse circuit with information shown with the bar code further increases the security function.

According to the sixth aspect of the present invention, there is provided a capacitive data storing method where, when a bank card and a pin number (corresponds to a second pin number of the present invention) of conventional constitution are stolen, a problem such as an easy cash dispensing from an account can be solved and a counterfeit of a bank card can be prevented effectively.

According to the seventh aspect of the present invention, there is provided a capacitive data storing method where, since the capacitive data storing method is applied to an electronic settlement card to make an electronic settlement system, a security at an electronic settlement and so forth can be protected at a very high security.

According to the eighth aspect of the present invention, there is provided a capacitive data storing method where, since the capacitive data storing method is applied to an ID card to make an enter and leave room system for controlling an open and close of the door key, an authorsed enter and leave room is assuredly prevented and a security for residence or possession can be drastically improved.

According to the ninth aspect of the present invention, there is provided a capacitive data storing method which is applicable for tangible products such as a bank card, a credit card, a prepaid card, a telephone card, a game card, a gift card, a CD, a DVD, a banking system, an authentication card for an on-line banking system, an identification card such as a license card, a key card, a gift coupon usable off-line and a book coupon, and causes an effect on various products that especially require an anti-counterfeit means.

## Claims

1. A capacitive data storing method,
wherein an optional number of a closed circuit and an open circuit made of conductive material are formed in a thin film condition on a substrate made of non-conductive material by using various technologies for making a conductive metal circuit film; and
wherein the closed circuit and the open circuit differ on a substrate to substrate basis so as to store an ID or a pin number of each of substrates or various information.

2. A capacitive data storing method according to Claim 1, wherein various technologies for forming the conductive metal circuit film comprise a screen printing method, a hot stamping, an etching, a thermal transfer and a laser marking.

3. A capacitive data storing method according to Claim 1 or 2, wherein the closed circuit and the open circuit formed on the substrate are overcoated with a non-conductive electronic material such as a polyethylene.

4. A capacitive data storing method according to Claim 1 or 2, wherein a magnetic memory portion and an IC card portion are parallelly placed, the capacitive data storing method allowing to rewrite points, various information or money amount information in real time.

5. A capacitive data storing method according to one of Claims 1 to 3, wherein various information such as an ID or a pin number of each of substrates or an overlimit money amount are printed by using bar code.

6. A banking system using a capacitive data storing method according to any one of Claims 1 to 5, comprising:
a system preventing an unauthorsed use of a bank card, the bank card comprising two cards with a fuse circuit portion, the two cards further comprising a first card storing only information as a key card for cash dispensing from an account, that is, being not allowed to cash independently and a second card storing necessary information for cashing and being constituted so as not to cash independently; and
steps, wherein, when the first card is inserted into an ATM machine and a first pin number the owner set is input, the second card comes into using; after the first pin number is judged to be true, the second card is inserted; and in the case of the second card, if a second pin number is inserted and then judged to be true, a money amount can be input for receiving a cashing and other services.

7. An electronic settlement system, wherein a capacitive data storing method according to any one of Claims 1 to 5 is applied to an electronic settlement system.

8. An enter and leave room system, wherein a capacitive data storing method according to any one of Claims 1 to 5 is applied to an ID card, the ID card controlling an open and close of the door key.

9. Various goods, wherein a capacitive data storing method according to any one of Claims 1 to 5 is applied as an anti-counterfeit means for a bank card, a credit card, a prepaid card, a telephone card, a game card, a gift card, a CD, a DVD, a banking system, an authentication card for an on-line banking system, an identification card such as a licence card, a key card, a gift coupon usable off-line and a book coupon.
